# EUROPÄISCHE PATENTSCHRIFT

(11) **EP 1 760 506 B1**
(45) Veröffentlichungstag und Bekanntmachung des Hinweises auf die Patenterteilung: **09.11.2011**
(21) Anmeldenummer: 06017598.1
(22) Anmeldetag: 24.08.2006
(51) Int. Cl.: G02B 6/44, H01R 13/52

(54) **Vorrichtung zur Abdichtung von Mikroducts und/oder Mikrokabeln**
Device for sealing of micro-ducts and/or micro-cables
Dispositif pour sceller des micro-conduits et/ou des micro-cables

(30) Priorität: 31.08.2005 DE 202005013818 U
(43) Veröffentlichungstag der Anmeldung: 07.03.2007
(73) Patentinhaber: CCS Technology, Inc., Wilmington, DE 19803 (US)
(72) Erfinder: Syplacz, Roman, 58099 Hagen (DE); Meyer, Thomas, Dipl.-Ing., 12557 Berlin (DE); Nath, Thorsten, Dipl.-Ing., 10243 Berlin (DE)
(74) Vertreter: Sturm, Christoph

(56) Entgegenhaltungen:
- EP-A1- 0 632 557
- EP-A1- 1 193 435
- EP-A2- 0 194 830
- DE-A1- 2 557 330
- DE-C1- 10 035 006
- FR-A1- 2 780 209
- US-A- 4 232 184
- US-A- 5 442 140

## Beschreibung

Die Erfindung betrifft eine Vorrichtung zur Abdichtung von Mikroducts sowie von in denselben geführten Mikrokabeln.

Aus dem Stand der Technik ist es bereits bekannt, Lichtwellenleiterkabelnetze aus in Verlegeröhrchen - sogenannten Mikroducts bzw. Miniducts - geführten Mikrokabeln bzw. Minikabeln aufzubauen. Derartige Mikrokabel bzw. Minikabel verfügen über einen Außendurchmesser bis max. in etwa 7 mm und werden üblicherweise in die Mikroducts, die einen Innendruchmesser von in etwa 8 mm und einen Außendurchmesser von in etwa 10 mm aufweisen, eingeblasen.

Beim Aufbau von Lichtwellenleiterkabelnetzen ist es erforderlich, sogenannte Verbindungsstellen bzw. Abzweigstellen für die Mikrokabel vorzusehen, wobei an den Verbindungsstellen bzw. Abzweigstellen Spleiße zwischen in Mikrokabeln geführten Lichtwellenleitern ausgebildet werden. Zum Schutz der Spleißverbindungen an den Verbindungsstellen bzw. Abzweigstellen werden die Spleißverbindungen in sogenannten Kabelmuffen abgelegt, wobei bei aus in Mikroducts geführten Mikrokabeln aufgebauten Lichtwellenleiterkabelnetzen sowohl die Mikroducts als auch die Mikrokabel in eine Kabelmuffe eingeführt und innerhalb der Kabelmuffe gegenüber einer Zugbeanspruchung sowie gegebenenfalls auch einer Torsionsbeanspruchung abgefangen werden müssen. Hierzu dienen spezielle Abfangvorrichtungen. Weiterhin ist es erforderlich, die Mikroducts sowie die in denselben geführten Mikrokabeln abzudichten, wobei hierzu Dichtelemente dienen. Nach dem Stand der Technik findet im Bereich jedes Mikroducts und Mikrokabels ein separates Dichtelements Verwendung.

Aus der US 5,442,140 A ist eine Vorrichtung zur Abdichtung von Kabeln bekannt, die einen Grundkörper aus einem elastischen Material umfasst. An einer Seite des Grundkörpers sind Ausnehmungen zur Aufnahme jeweils eines Kabels eingebracht. An einer gegenüberliegenden Seite des Grundkörpers sind schlauchartige Elemente in die Ausnehmungen einführbar, wobei die schlauchartigen Elemente gegenüber dem Grundkörper als separate Baugruppen ausgebildet sind und der Abdichtung der von der ersten Seite aus in die Ausnehmungen des Grundkörpers eingeführten Kabel dienen. Ein Innendurchmesser der schlauchartigen Vorsprünge ist an einen Außendurchmesser der abzudichtenden Kabel derart angepasst, dass der Innendurchmesser der schlauchartigen Vorsprünge zumindest abschnittsweise geringfügig kleiner ist als ein Außendurchmesser der abzudichtenden Kabel.

Hinsichtlich weiteren Standes der Technik wird verwiesen auf die EP 1 193 435 A1 und auf die DE 25 27 330 A1.

Hiervon ausgehend liegt der vorliegenden Erfindung das Problem zu Grunde, eine neuartige Vorrichtung zur Abdichtung von Mikroducts sowie von in denselben geführten Mikrokabeln zu schaffen.

Dieses Problem wird eine Vorrichtung zur Abdichtung von Mikroducts sowie von in denselben geführten Mikrokabeln gemäß Anspruch 1 gelöst. Die erfindungsgemäße Vorrichtung umfasst einen Grundkörper aus einem elastischen Material, wobei in eine Seite des Grundköpers mehrere Ausnehmungen zur Aufnahme jeweils eines Mikroducts eingebracht sind, wobei an der gegenüberliegenden Seite des Grundkörpers als integraler Bestandteil desselben mehrere schlauchartige Vorsprünge aus einem elastischen Material zur Aufnahme jeweils eines in einem Mikroduct geführten Mikrokabels ausgebildet sind, wobei ein Innendurchmesser der Ausnehmungen zumindest abschnittsweise geringfügig kleiner als ein Außendurchmesser der Mikroducts sowie ein Innendurchmesser der schlauchartigen Vorsprünge zumindest abschnittsweise geringfügig kleiner als ein Außendurchmesser der Mikrokabel ist, derart, dass die Mikroducts in dem Grundköper und die Mikrokabel in dem jeweiligen schlauchartigen Vorsprung abdichtbar sind, und wobei in die Ausnehmungen zur Aufnahme der Mikroducts eine den Innendurchmesser derselben abschnittsweise verringernde Dichtlippe integriert ist, nämlich in einen Abschnitt der Ausnehmung, in welchen die Mikroducts einführbar sind.

Die erfindungsgemäße Vorrichtung zur Abdichtung von Mikroducts sowie von in denselben geführten Mikrokabeln stellt eine Mehrfachdichtung für mehrere Mikroducts sowie entsprechend mehrere Mikrokabel bereit, wodurch es möglich ist, die Anzahl der Dichtelemente zu verringern. Der Grundkörper der erfindungsgemäßen Vorrichtung dient der Abdichtung mehrer Mikroducts, zur Abdichtung der Mikrokabel sind an einer Seite des Grundköpers für jedes Mikrokabel mehrere schlauchartige Vorsprünge ausgebildet. Die erfindungsgemäße Vorrichtung zeichnet sich durch einen einfachen Aufbau aus und kann relativ kostengünstig hergestellt werden. Weiterhin zeichnet sich die erfindungsgemäße Vorrichtung durch eine einfache Handhabung bzw. ein einfaches Handling aus.

Vorzugsweise ist der Innendurchmesser der schlauchartigen Vorsprünge abgestuft ausgebildet, derart, dass sich ausgehend vom Grundkörper der Innendurchmesser der schlauchartigen Vorsprünge stufenartig verkleinert, und dass jeder der schlauchartigen Vorsprünge mehrere Abschnitte mit unterschiedlichen Innendurchmessern umfasst, wobei zumindest einige dieser Abschnitte der Abdichtung eines Mikrokabels dienen.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, anhand der Zeichnung näher erläutert. In der Zeichnung zeigt:
- Fig. 1:: eine erfindungsgemäße Vorrichtung zur Abdichtung von Mikroducts sowie von in denselben geführten Mikrokabeln nach einem ersten Ausführungsbeispiel der Erfindung in einer Seitenansicht;
- Fig. 2:: die Vorrichtung gemäß Fig. 1 in einer perspektivischer Ansicht von oben;
- Fig. 3:: die Vorrichtung gemäß Fig. 1 in einer perspektivischer Ansicht von unten;
- Fig. 4:: die Vorrichtung gemäß Fig. 1 in einer Ansicht von oben;
- Fig. 5:: einen Querschnitt durch die Vorrichtung gemäß Fig. 1 entlang der Schnittrichtung V-V in Fig. 4;
- Fig. 6:: eine erfindungsgemäße Vorrichtung zur Abdichtung von Mikroducts sowie von in denselben geführten Mikrokabeln nach einem zweiten Ausführungsbeispiel der Erfindung in einer Ansicht analog zu Fig. 4;
- Fig. 7:: einen Querschnitt durch die Vorrichtung gemäß Fig. 6 entlang der Schnittrichtung VII-VII in Fig. 6; und
- Fig. 8:: die erfindungsgemäße Vorrichtung zusammen mit einem Teil einer Kabelmuffe.

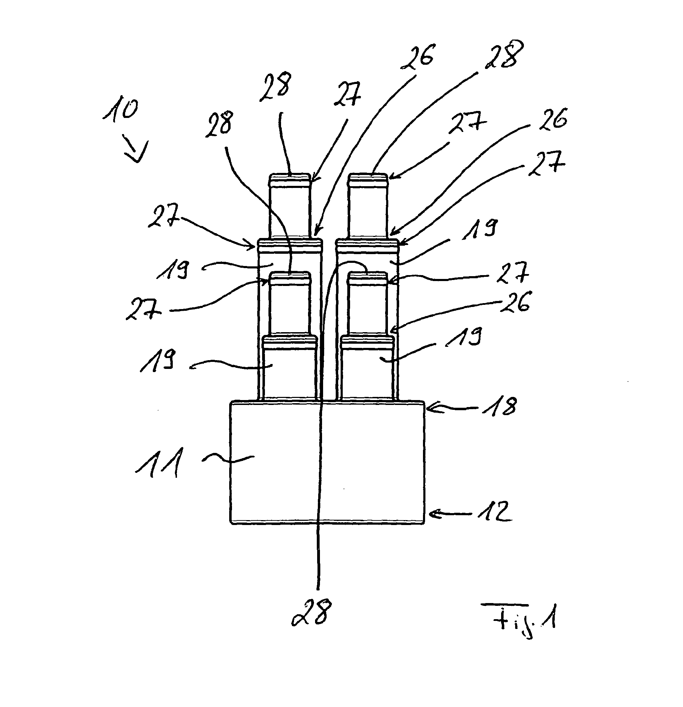

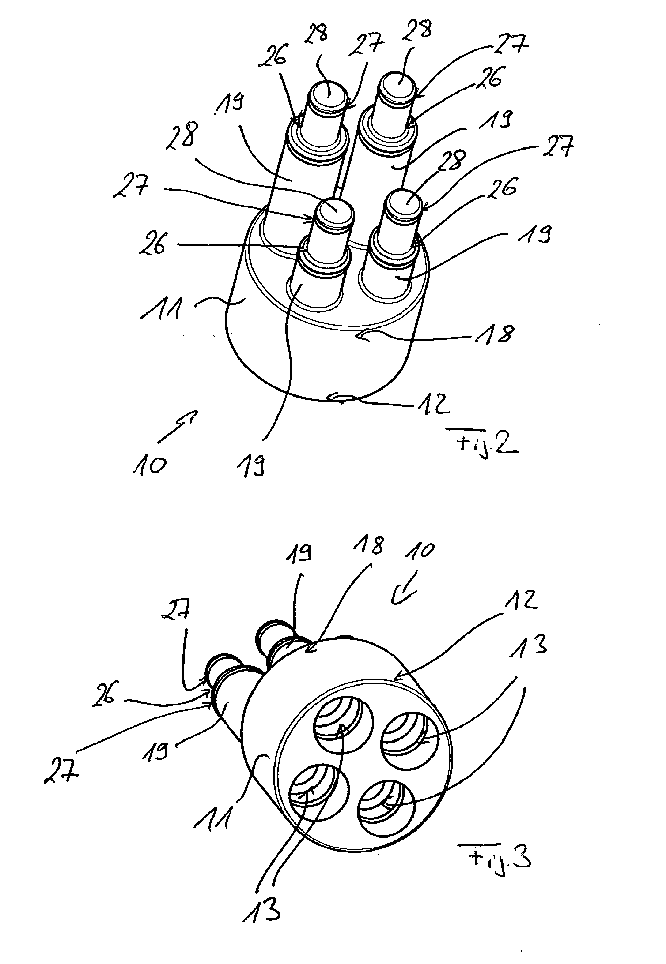

Nachfolgend wird die hier vorliegende Erfindung unter Bezugnahme auf Fig. 1 bis 8 in größerem Detail beschrieben.

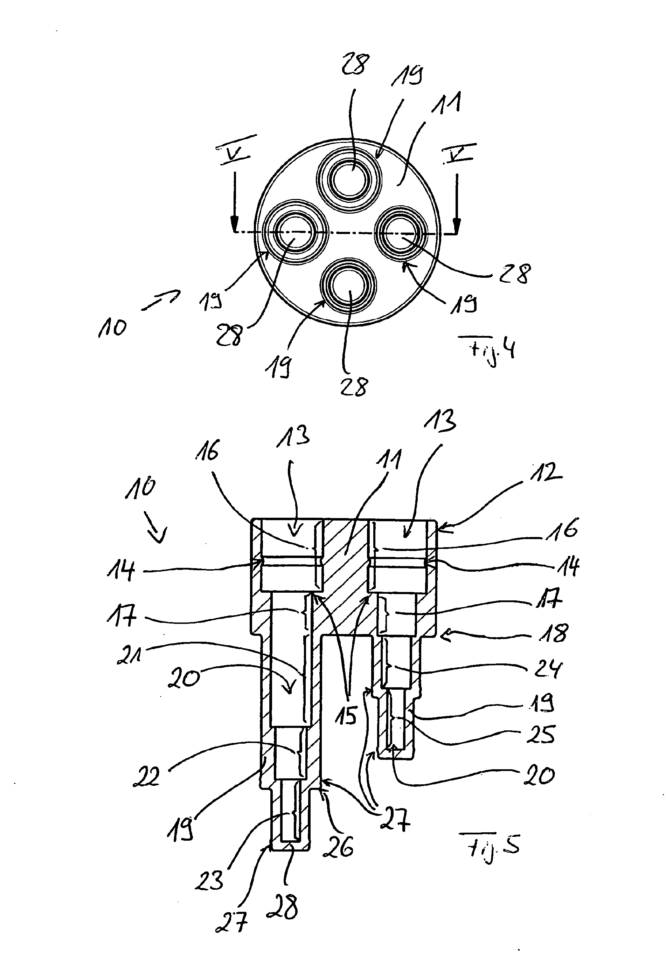

Fig. 1 bis 5 zeigen ein erstes Ausführungsbeispiel einer erfindungsgemäßen Vorrichtung 10 zur Abdichtung von Mikroducts sowie Mikrokabeln, wobei die erfindungsgemäße Vorrichtung 10 einen Grundkörper 11 aus einem elastischen Material aufweist. In ein erstes Ende 12 des Grundkörpers 11 sind mehrere Ausnehmungen 13 eingebracht, wobei in jede der Ausnehmungen 13 ein Mikroduct eingeführt werden kann. Die Ausnehmungen 13 verfügen über einen Innendurchmesser, der zumindest abschnittsweise geringfügig kleiner als ein Außendurchmesser der in die Ausnehmungen 13 einzuführenden Mikroducts ist, sodass die Mikroducts in die Ausnehmungen 13 eingeführt gegenüber dem Grundkörper 12 abgedichtet werden können. Wie Fig. 5 entnommen werden kann, ist in die Ausnehmungen 13 vorzugsweise jeweils eine umlaufende Dichtlippe 14 integriert, die den Innendurchmesser der Ausnehmung 13 abschnittsweise verringert. Hierdurch kann die Dichtwirkung des Grundkörpers 11 gegenüber den Mikroducts verbessert werden.

Die Einführtiefe der Mikroducts in die Ausnehmungen 13 wird durch stufenartige Absätze bzw. Anschläge 15 definiert, die im Bereich der Ausnehmungen 13 ausgebildet sind. In einem dem Ende 12 des Grundkörpers 11 zugewandten Abschnitt 16 verfügen die Ausnehmungen 13 des Grundkörpers 11 demnach über einen Innendurchmesser, der geringfügig kleiner als ein Außendurchmesser der in die Ausnehmungen 13 einzuführenden Mikroducts ist und der ein Einführen der Mikroducts in die Ausnehmungen 13 ermöglicht. Demgegenüber verfügen die Ausnehmungen 13 des Grundköpers 11 in Abschnitten 17, die einem dem Ende 12 gegenüberliegenden Ende 18 des Grundkörpers 11 zugewandt sind, über einen derart verringerten Innendurchmesser, dass die stufenartigen Anschläge 17 ausgebildet werden, die ein weiteres Einschieben der Mikroducts in die Ausnehmungen 13 des Grundkörpers 11 verhindern, jedoch ein Einschieben bzw. Einführen von in den Mikroducts geführten Mikrokabel in die Abschnitte 17 ermöglichen.

Bei Mikroducts, die einen Außendurchmesser von in etwa 10 mm aufweisen und in denen Mikrokabel mit einem Außendurchmesser von maximal in etwa 7 mm geführt sind, verfügen die Ausnehmungen 13 in den Abschnitten 16 über einen Innendurchmesser von in etwa 9,7 mm und in den Abschnitten 17 von in etwa 8 mm. Im Bereich der Dichtlippen 14 verfügen die Ausnehmungen 13 über einen Innendurchmesser von in etwa 9,1 mm.

An dem Ende 18 verfügt der Grundkörper 11 über mehrere schlauchartige Vorsprünge 19. Die schlauchartigen Vorsprünge 19 dienen der Aufnahme und Abdichtung von in den Mikroducts geführten Mikrokabeln. Die schlauchartigen Vorsprünge 19 sind integraler Bestandteil des Grundkörpers 11 und aus demselben elastischem Material gefertigt wie der Grundkörper 11. Wie insbesondere Fig. 1 und 5 entnommen werden kann, verfügen die schlauchartigen Vorsprünge 19 über eine unterschiedliche Länge.

Die schlauchartigen Vorsprünge 19 definieren bzw. begrenzen jeweils einen Hohlraum 20, in welche die in den Mikroducts geführten Mikrokabel einführbar sind. Jeder Hohlraum 20 eines schlauchartigen Vorsprungs 19 mündet dabei in eine Ausnehmung 13 des Grundkörpers 11, nämlich in den dem Ende 18 des Grundkörpers 11 gegenüberliegenden Abschnitt 17 der Ausnehmung 13.

Die Hohlräume 20 der schlauchartigen Vorsprünge 19 sind hinsichtlich Ihres Innendurchmessers abgestuft ausgebildet, und zwar derart, dass sich der Innendurchmesser der schlauchartigen Vorsprünge 19 und damit der Hohlräume 20 derselben ausgehend vom Grundkörper 11 stufenartig verkleinert.

Gemäß Fig. 5 sind die Hohlräume 20 der längeren schlauchartigen Vorsprünge 19 in insgesamt drei Abschnitte 21, 22 und 23 untergliedert, die Hohlräume 20 der kürzeren schlauchartigen Vorsprünge 19 sind hingegen in lediglich zwei Abschnitte 24 und 25 aufgeteilt.

Im Bereich der längeren schlauchartigen Vorsprünge 19 (siehe Fig. 5) verfügt der sich unmittelbar an den Grundkörper 11 anschließende Abschnitt 21 des Hohlraums 20 über einen Innendurchmesser, der dem Innendurchmesser des Abschnitts 17 der Ausnehmung 13 entspricht, wobei dieser Innendurchmesser größer als ein Außendurchmesser von in den Mikroducts geführten Mikrokabeln ist. Hierdurch ist gewährleistet, dass die Mikrokabel in die längeren schlauchartigen Vorsprünge 19 leicht und widerstandsfrei eingeführt werden können. An diesen Abschnitt 21 schließen sich zwei weitere Abschnitte 22 und 23 an, wobei der sich unmittelbar an den Abschnitt 21 anschließende Abschnitt 22 über einen kleineren Innendurchmesser verfügt als der Abschnitt 21, und wobei der sich unmittelbar an den Abschnitt 22 anschließende Abschnitt 23 über einen kleineren Innendurchmesser verfügt als der sich unmittelbar an den Abschnitt 21 anschließende Abschnitt 22. Die Innendurchmesser der Abschnitte 22 und 23 sind dabei an kabelspezifische Außendurchmesser angepasst, und zwar derart, dass ein in einem Mikroduct geführtes Mikrokabel abhängig von dessen Außendurchmesser entweder im Abschnitt 22 oder im Abschnitt 23 abgedichtet wird.

Ist ein Mikrokabel auf Grund seines Außendurchmessers im Abschnitt 22 des Hohlraums 20 des schlauchartigen Vorsprungs 19 abzudichten, so wird der Abschnitt 23 durch Durchtrennen des schlauchartigen Vorsprungs im Bereich eines Absatzes 26 zwischen den beiden Abschnitten 22 und 23 entfernt, wobei hierzu in eine Außenwand des schlauchartigen Vorsprungs 19 eine Einkerbung 27 eingebracht ist, welche die Trennebene zum Abrennen des Abschnitts 23 vorgibt. Ist ein Mikrokabel auf Grund seines Außendurchmessers hingegen im Abschnitt 23 abzudichten, so wird lediglich ein Endabschnitt 28 vom schlauchartigen Vorsprung 19 abgetrennt, wobei dieser Endabschnitt 28 den schlauchartigen Vorsprung 19 an einem vom Grundkörper 11 beabstandeten Ende verschließt, sodass dann, wenn in einem Mikroduct kein Mikrokabel geführt ist, der entsprechende schlauchartige Vorsprung 19 als Blindstopfen verwendet werden kann.

Der Abschnitt 22 verfügt über einen Innendurchmesser von in etwa 5,3 mm und der Abschnitt 23 verfügt über einen Innendurchmesser von in etwa 3,3 mm. Werden in Mikroducts Mikrokabel mit einem Außendurchmesser in der Größenordung zwischen 7 mm und 5,5 mm geführt, so werden dieselben in den Abschnitten 22 abgedichtet und die Abschnitte 23 werden abgetrennt. Werden in Mikroducts Mikrokabel mit einem Außendurchmesser in der Größenordung zwischen 5,4 mm und 3,5 mm geführt, so werden dieselben in den Abschnitten 23 abgedichtet und es werden die Endabschnitte 28 abgetrennt.

Wie bereits erwähnt, ist der Hohlraum 20 des kürzeren schlauchartigen Vorsprungs 19 lediglich in zwei unterschiedliche Abschnitte 24 und 25 untergliedert, die entsprechend den Abschnitten 22 und 23 der längeren schlauchartigen Vorsprünge 19 ausgeführt sind. Im Bereich der kürzeren schlauchartigen Vorsprünge 19 ist demnach kein Abschnitt vorhanden, in welchen die Ausnehmungen 19 einen Innendurchmesser aufweisen, der dem Innendurchmesser des Abschnitts 17 der Ausnehmungen 13 entspricht. Zur Vermeidung von Wiederholungen wird für die Abschnitte 24 und 25 der kürzeren schlauchartigen Vorsprünge 19 auf die Ausführungen zu den Abschnitten 22 und 23 der längeren schlauchartigen Vorsprünge 19 verweisen.

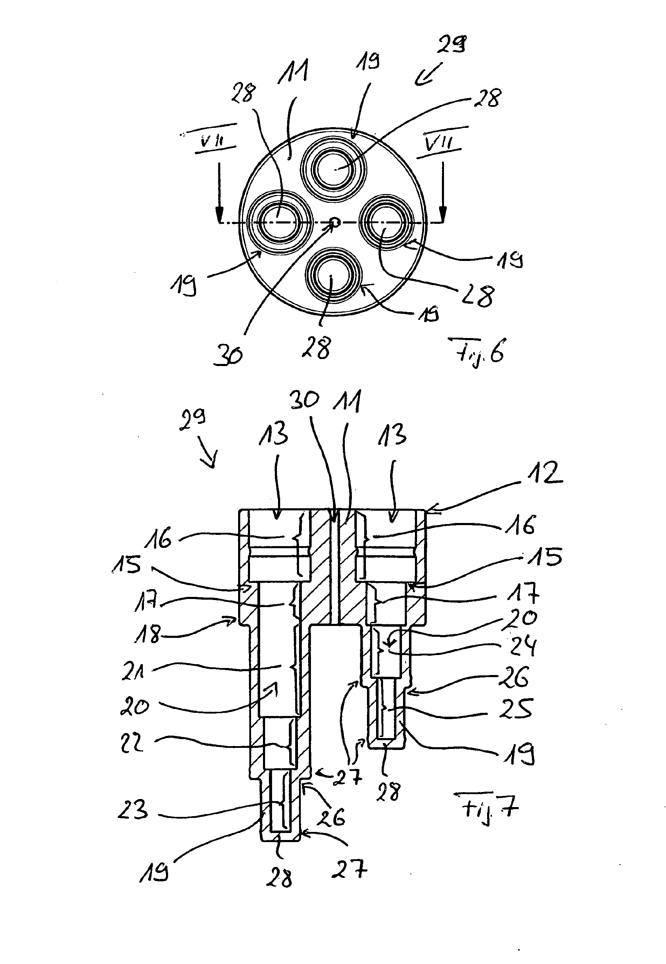

Eine erfindungsgemäße Vorrichtung zur Abdichtung von Mikroducts sowie Mikrokabeln nach einem zweiten Ausführungsbeispiel der hier vorliegenden Erfindung zeigen Fig. 6 und 7, wobei das Ausführungsbeispiel der Fig. 6 und 7 im Wesentlichen dem Ausführungsbeispiel der Fig. 1 bis 5 entspricht, sodass zur Vermeidung unnötiger Wiederholungen für gleiche Baugruppen gleiche Bezugsziffern verwendet werden. Nachfolgend wird nur auf die Details eingegangen, durch die sich das Ausführungsbeispiel der Fig. 6 und 7 vom Ausführungsbeispiel der Fig. 1 bis 5 unterscheidet.

So ist im Ausführungsbeispiel der Fig. 6 und 7 in den Grundkörper 11 in etwa mittig eine den Grundkörper 11 durchdringende Bohrung 30 eingebracht. In die Bohrung 30 kann ein Abfangelement geführt werden, um die erfindungsgemäße Vorrichtung z. B. innerhalb einer Kabelmuffe abzufangen, sodass beim Einführen von Mikroducts sowie Mikrokabeln in die erfindungsgemäße Vorrichtung die Position derselben innerhalb der Kabelmuffe unverändert bleibt. Hierdurch kann ein unbeabsichtigtes Verschieben der erfindungsgemäßen Vorrichtung bei der Montage verhindert werden.

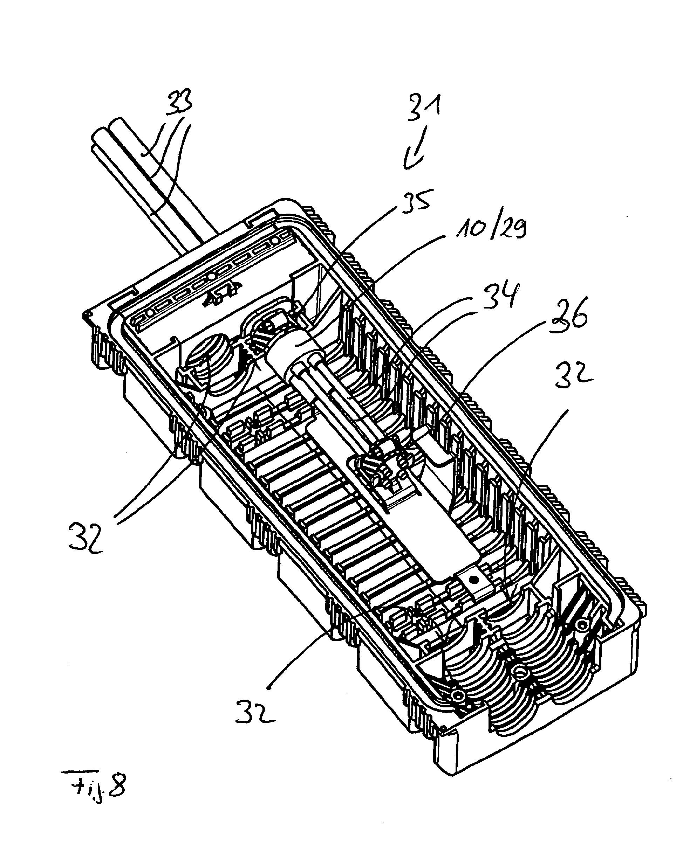

Fig. 8 zeigt einen Ausschnitt aus einer Kabelmuffe 31, in welcher eine erfindungsgemäße Vorrichtung 10 bzw. 29 zur Abdichtung von Mikroducts sowie Mikrokabel Verwendung findet. So verfügt die Kabelmuffe 31 gemäß Fig. 8 über mehrere Öffnungen 32, in welche von außerhalb der Kabelmuffe 31 Mikroducts 33 mit darin geführten Mikrokabeln 34 eingeführt werden können. In Fig. 8 sind im Bereich einer solchen Öffnung 32 vier Mikroducts 33 mit darin geführten Mikrokabeln 34 in die Kabelmuffe 31 eingeführt, wobei die Mikroducts 33 an einem Abfangelement 35 und die Mikrokabel 34 an einem davon beabstandeten Abfangelement 36 gegen Zugbeanspruchung sowie Torsionsbeanspruchung abgefangen werden. Zwischen den beiden Abfangelementen 35 und 36 ist eine erfindungsgemäße Vorrichtung 10 bzw. 29 positioniert, um die Übergangsstelle zwischen den Mikroducts 33 und den Mikrokabeln 34 innerhalb der Kabelmuffe 31 abzudichten. Eine die Bohrung 30 des Grundkörpers 11 der Vorrichtung 29 durchdringendes Abfangelement zur Abfangung der erfindungsgemäßen Vorrichtung 29 innerhalb der Kabelmuffe 31 wird im Bereich des Abfangelements 35 zusammen mit den Mikroducts 33 abgefangen.

In den gezeigten Ausführungsbeispielen verfügen die erfindungsgemäßen Vorrichtungen 10 bzw. 29 über jeweils vier Ausnehmungen 13 sowie vier schlauchartige Vorsprünge 19 zur Abdichtung von vier Mikroducts sowie vier Mikrokabeln. Es sei darauf hingewiesen, dass die Anzahl der Ausnehmungen 13 sowie der schlauchartigen Vorsprünge 19 auch größer oder kleiner sein kann. Vorzugsweise sind jedoch die Ausnehmungen 13 sowie die schlauchartigen Vorsprünge 19 symmetrisch oder gleichverteilt dem Grundkörper 11 zugeordnet.

Mit der erfindungsgemäßen Vorrichtung können mehrere Mikroducts sowie Mikrokabel gleichzeitig abgedichtet werden. Hierdurch lässt sich die Anzahl der verwendeten Einzelteile reduzieren. Die erfindungsgemäße Vorrichtung ist für unterschiedliche Außendurchmesser von Mikrokabeln geeignet, wobei hierzu die schlauchartigen Vorsprünge über entsprechend angepasste Abschnitte verfügen. In dem Fall, in welchem innerhalb der Mikroducts noch kein Mikrokabel geführt ist, bleiben die schlauchartigen Vorsprünge an einem vom Grundkörper beabstandeten Ende verschlossen, sodass dieselben dann einen Blindstopfen bilden.

### Bezugszeichenliste

- 10: Vorrichtung
- 11: Grundkörper
- 12: Ende
- 13: Ausnehmung
- 14: Dichtlippe
- 15: Anschlag
- 16: Abschnitt
- 17: Abschnitt
- 18: Ende
- 19: Vorsprung
- 20: Hohlraum
- 21: Abschnitt
- 22: Abschnitt
- 23: Abschnitt
- 24: Abschnitt
- 25: Abschnitt
- 26: Absatz
- 27: Einkerbung
- 28: Endabschnitt
- 29: Vorrichtung
- 30: Bohrung
- 31: Kabelmuffe
- 32: Öffnung
- 33: Mikroduct
- 34: Mikrokabel
- 35: Abfangelement
- 36: Abfangelement

## Patentansprüche

1. Vorrichtung zur Abdichtung von Mikroducts sowie von in denselben geführten Mikrokabeln, mit einem Grundkörper (11) aus einem elastischen Material, wobei in eine Seite (12) des Grundköpers (11) mehrere Ausnehmungen (13) zur Aufnahme jeweils eines Mikroducts eingebracht sind, wobei an dergegenüberliegenden Seite (18) des Grundkörpers (11) als integraler Bestandteil desselben mehrere schlauchartige Vorsprünge (19) aus einem elastischen Material zur Aufnahme jeweils eines in einem Mikroduct geführten Mikrokabels ausgebildet sind, wobei ein Innendurchmesser der Ausnehmungen (13) zumindest abschnittsweise geringfügig kleiner als ein Außendurchmesser der Mikroducts sowie ein Innendurchmesser der schlauchartigen Vorsprünge (19) zumindest abschnittsweise geringfügig kleiner als ein Außendurchmesser der Mikrokabel ist, derart, dass die Mikroducts in dem Grundköper (11) und die Mikrokabel in dem jeweiligen schlauchartigen Vorsprüngen (19) abdichtbar sind, und wobei in die Ausnehmungen (13) zur Aufnahme der Mikroducts eine den Innendurchmesser derselben abschnittsweise verringernde Dichtlippe (14) integriert ist, nämlich in einen Abschnitt (16) der Ausnehmung (13), in welchen die Mikroducts einführbar sind.

2. Vorrichtung nach Anspruch 1, **dadurch gekennzeichnet, dass** die Ausnehmungen (13) zwei Abschnitte (16, 17) mit unterschiedlichen Innendurchmessern aufweisen, wobei ein zwischen den beiden Abschnitten (16, 17) ausgebildeter Absatz einen Anschlag (15) bildet, der die Einführung der Mikroducts in die Ausnehmungen (13) begrenzt.

3. Vorrichtung nach Anspruch 1 oder 2, **dadurch gekennzeichnet, dass** von den schlauchartigen Vorsprüngen (19) definierte Hohlräume (20) in jeweils eine der Ausnehmungen (13) des Grundkörpers (11) münden.

4. Vorrichtung nach einem oder mehreren der Ansprüche 1 bis 3, **dadurch gekennzeichnet, dass** die Ausnehmungen (13) und die schlauchartigen Vorsprünge (19) symmetrisch oder gleichverteilt am Grundkörper (11) ausgebildet sind.

5. Vorrichtung nach einem oder mehreren der Ansprüche 1 bis 4, **dadurch gekennzeichnet, dass** die schlauchartigen Vorsprünge (19) an einem vom Grundkörper (11) beabstandeten Ende verschlossen und durch Durchtrennen geöffnet werden können.

6. Vorrichtung nach einem oder mehreren der Ansprüche 1 bis 5, **dadurch gekennzeichnet, dass** der Innendurchmesser der schlauchartigen Vorsprünge (19) abgestuft ausgebildet ist, derart, sich ausgehend vom Grundkörper (11) der Innendurchmesser der schlauchartigen Vorsprünge (19) stufenartig verkleinert.

7. Vorrichtung nach einem oder mehreren der Ansprüche 1 bis 6, **dadurch gekennzeichnet, dass** jeder der schlauchartigen Vorsprünge (19) mehrere Abschnitte (21, 22, 23; 45, 25) mit unterschiedlichen Innendurchmessern aufweist, wobei zumindest einige dieser Abschnitte (22, 23; 45, 25) an die Abdichtung eines Mikrokabels angepasst sind.

8. Vorrichtung nach Anspruch 7, **dadurch gekennzeichnet, dass** ein erster Abschnitt (21) eines schlauchartigen Vorsprungs (19) einen Innendurchmesser aufweist, der größer als der Außendurchmesser der in den Mikroducts aufgenommenen Mikrokabel ist, sodass die Mikrokabel in den schlauchartigen Vorsprung (19) leicht einführbar sind.

9. Vorrichtung nach Anspruch 7 oder 8, **dadurch gekennzeichnet, dass** sich an den ersten Abschnitt (21) oder den Grundköper (11) zumindest zwei Abschnitte (22, 23; 24, 25) anschließen, die an die Abdichtung eines Mikrokabels angepasst sind, wobei der Innendurchmesser eines sich an den ersten Abschnitt (21) oder an den Grundköper (11) unmittelbar anschließenden zweiten Abschnitts (22; 24) kleiner als der Innendurchmesser des ersten Abschnitts (21) oder der Ausnehmung (13) des Grundkörpers (11) ist, wobei der Innendurchmesser eines sich an den zweiten Abschnitt (22; 24) unmittelbar anschließenden dritten Abschnitts (23; 25) kleiner als der Innendurchmesser des zweiten Abschnitts (22, 24) ist, und wobei der Innendurchmesser eines der sich an den ersten Abschnitt (21) oder den Grundköper (11) anschließenden Abschnitte (22, 23; 24, 25) geringfügig kleiner als der Außendurchmesser der in den Mikroducts aufgenommenen Mikrokabel ist, sodass die Mikrokabel in diesem Abschnitt abdichtbar sind.

10. Vorrichtung nach Anspruch 9, **dadurch gekennzeichnet, dass** zwischen den sich an den ersten Abschnitt (21) oder den Grundköper (11) anschließenden Abschnitten (22, 23; 24, 25) der schlauchartigen Vorsprünge (19) jeweils ein Absatz (26) ausgebildet ist, im Bereich dessen die schlauchartigen Vorsprünge (19) durchtrennbar sind, um dieselben an den tatsächlichen Außendurchmesser eines abzudichtenden Mikrokabels anzupassen.

11. Vorrichtung nach einem oder mehreren der Ansprüche 1 bis 10, **dadurch gekennzeichnet, dass** sich in etwa mittig durch den Grundkörper (11) eine Ausnehmung (30) erstreckt, zur Aufnahme eines Abfangelements zur Abfangung der Vorrichtung in einer Verteilereinrichtung, insbesondere in einer Kabelmuffe.

## Claims

1. Apparatus for sealing off microducts and microcables guided in said microducts, comprising a basic body (11) consisting of an elastic material, wherein a plurality of cutouts (13) for accommodating in each case one microduct are introduced into one side (12) of the basic body (11), wherein a plurality of hose-like projections (19) consisting of an elastic material for accommodating in each case one microcable guided in a microduct are formed as an integral component of the basic body (11) on the opposite side (18) thereof, wherein an inner diameter of the cutouts (13) is, at least sectionally, slightly smaller than an outer diameter of the microducts and an inner diameter of the hose-like projections (19) is, at least sectionally, slightly smaller than an outer diameter of the microcables, such that the microducts can be sealed off in the basic body (11) and the microcables can be sealed off in the respective hose-like projections (19), and wherein a sealing lip (14), which sectionally reduces the inner diameter of the microducts is integrated in the cutouts (13) for accommodating the microducts, namely in a section (16) of the cutout (13) into which the microducts can be inserted.

2. Apparatus according to Claim 1, **characterized in that** the cutouts (13) have two sections (16, 17) with different inner diameters, wherein a shoulder formed between the two sections (16, 17) forms a stop (15), which limits the insertion of the microducts into the cutouts (13).

3. Apparatus according to Claim 1 or 2, **characterized in that** cavities (20) defined by the hose-like projections (19) open out into in each case one of the cutouts (13) in the basic body (11).

4. Apparatus according to one or more of Claims 1 to 3, **characterized in that** the cutouts (13) and the hose-like projections (19) are formed symmetrically or so as to be distributed uniformly on the basic body (11).

5. Apparatus according to one or more of Claims 1 to 4, **characterized in that** the hose-like projections (19) can be closed at one end which is remote from the basic body (11) and can be opened by being severed.

6. Apparatus according to one or more of Claims 1 to 5, **characterized in that** the inner diameter of the hose-like projections (19) has a stepped formation such that, starting from the basic body (11), the inner diameter of the hose-like projections (19) is reduced stepwise.

7. Apparatus according to one or more of Claims 1 to 6, **characterized in that** each of the hose-like projections (19) has a plurality of sections (21, 22, 23; 45, 25) with different inner diameters, wherein at least some of these sections (22, 23; 45, 25) are matched to the seal of a microcable.

8. Apparatus according to Claim 7, **characterized in that** a first section (21) of a hose-like projection (19) has an inner diameter which is greater than the outer diameter of the microcables accommodated in the microducts, with the result that the microcables can be inserted easily into the hose-like projection (19).

9. Apparatus according to Claim 7 or 8, **characterized in that** at least two sections (22, 23; 24, 25) adjoin the first section (21) or the basic body (11), said sections (22, 23; 24, 25) being matched to the seal of a microcable, wherein the inner diameter of a second section (22; 24) which adjoins the first section (21) or the basic body (11) directly, is smaller than the inner diameter of the first section (21) or the cutout (13) in the basic body (11), wherein the inner diameter of a third section (23; 25), which adjoins the second section (22; 24) directly, is smaller than the inner diameter of the second section (22, 24), and wherein the inner diameter of one of the sections (22, 23; 24, 25) which adjoins the first section (21) or the basic body (11) is slightly smaller than the outer diameter of the microcables accommodated in the microducts, with the result that the microcables can be sealed off in this section.

10. Apparatus according to Claim 9, **characterized in that** in each case one shoulder (26) is formed between those sections (22, 23; 24, 25) of the hose-like projections (19) which adjoin the first section (21) or the basic body (11), with it being possible for the hose-like projections (19) to be severed in the region of said shoulder in order to match said projections to the actual outer diameter of a microcable to be sealed off.

11. Apparatus according to one or more of Claims 1 to 10, **characterized in that** a cutout (30) extends approximately centrally through the basic body (11) for the purpose of accommodating a securing element for securing the apparatus in a distribution device, in particular in a cable sleeve.

## Revendications

1. Dispositif pour sceller des micro-conduits ainsi que des micro-câbles guidés dans ceux-ci, comprenant un corps de base (11) constitué d'un matériau élastique, plusieurs évidements (13) pour recevoir à chaque fois un micro-conduit étant réalisés dans un côté (12) du corps de base (11), plusieurs saillies (19) de type tuyau flexible en un matériau élastique étant réalisées sur le côté opposé (18) du corps de base (11) en tant que constituant intégral de celui-ci pour recevoir à chaque fois un micro-câble guidé dans un micro-conduit, un diamètre intérieur des évidements (13) étant au moins par endroits légèrement plus petit qu'un diamètre extérieur du micro-conduit et un diamètre intérieur des saillies (19) de type tuyau flexible étant au moins par endroits légèrement plus petit qu'un diamètre extérieur du micro-câble, de telle sorte que les micro-conduits dans le corps de base (11) et les micro-câbles dans les saillies respectives (19) de type tuyau flexible puissent être scellés, et une lèvre d'étanchéité (14) réduisant par endroits le diamètre des micro-conduits étant intégrée dans les évidements (13) pour recevoir les micro-conduits, à savoir dans une portion (16) de l'évidement (13) dans lequel les micro-conduits peuvent être introduits.

2. Dispositif selon la revendication 1, **caractérisé en ce que** les évidements (13) présentent deux portions (16, 17) ayant des diamètres intérieurs différents, un épaulement réalisé entre les deux portions (16, 17) formant une butée (15) qui limite l'introduction des micro-conduits dans les évidements (13).

3. Dispositif selon la revendication 1 ou 2, **caractérisé en ce que** des cavités (20) définies par les saillies (19) de type tuyau flexible débouchent dans l'un respectif des évidements (13) du corps de base (11).

4. Dispositif selon l'une quelconque ou plusieurs des revendications 1 à 3, **caractérisé en ce que** les évidements (13) et les saillies (19) de type tuyau flexible sont réalisés de manière symétrique ou répartie uniformément sur le corps de base (11).

5. Dispositif selon l'une quelconque ou plusieurs des revendications 1 à 4, **caractérisé en ce que** les saillies (19) de type tuyau flexible sont fermées à une extrémité éloignée du corps de base (11) et peuvent être ouvertes par sectionnement.

6. Dispositif selon l'une quelconque ou plusieurs des revendications 1 à 5, **caractérisé en ce que** le diamètre intérieur des saillies (19) de type tuyau flexible est réalisé de manière étagée, de telle sorte que, partant du corps de base (11), le diamètre intérieur des saillies (19) de type tuyau flexible se rétrécisse de manière étagée.

7. Dispositif selon l'une quelconque ou plusieurs des revendications 1 à 6, **caractérisé en ce que** chacune des saillies (19) de type tuyau flexible présente plusieurs portions (21, 22, 23 ; 45, 25) ayant des diamètres intérieurs différents, au moins certaines de ces portions (22, 23 ; 45, 25) étant adaptées au scellage d'un micro-câble.

8. Dispositif selon la revendication 7, **caractérisé en ce qu'**une première portion (21) d'une saillie (19) de type tuyau flexible présente un diamètre intérieur qui est supérieur au diamètre extérieur des micro-câbles reçus dans les micro-conduits, de sorte que les micro-câbles puissent être aisément introduits dans la saillie (19) de type tuyau flexible.

9. Dispositif selon la revendication 7 ou 8, **caractérisé en ce qu'**à la première portion (21) ou au corps de base (11) se raccordent au moins deux portions (22, 23 ; 24, 25) qui sont adaptées au scellage d'un micro-câble, le diamètre intérieur d'une deuxième portion (22 ; 24) se raccordant directement à la première portion (21) ou au corps de base (11) étant inférieur au diamètre intérieur de la première portion (21) ou de l'évidement (13) du corps de base (11), le diamètre intérieur d'une troisième portion (23 ; 25) se raccordant directement à la deuxième portion (22 ; 24) étant inférieur au diamètre intérieur de la deuxième portion (22, 24), et le diamètre intérieur de l'une des portions (22, 23 ; 24, 25) se raccordant à la première portion (21) ou au corps de base (11) étant légèrement inférieur au diamètre extérieur des micro-câbles reçus dans les micro-conduits, de sorte que les micro-câbles puissent être scellés dans cette portion.

10. Dispositif selon la revendication 9, **caractérisé en ce qu'**entre les portions (22, 23 ; 24, 25) des saillies (19) de type tuyau flexible se raccordant à la première portion (21) ou au corps de base (11) est réalisé à chaque fois un épaulement (26) dans la région duquel les saillies (19) de type tuyau flexible peuvent être sectionnées afin de les adapter au diamètre extérieur effectif d'un micro-câble à sceller.

11. Dispositif selon l'une quelconque ou plusieurs des revendications 1 à 10, **caractérisé en ce qu'**un évidement (30) s'étend approximativement centralement à travers le corps de base (11), pour recevoir un élément de capture pour capturer le dispositif dans un dispositif répartiteur, notamment dans un manchon de câble.
